Europäisches Patentamt

European Patent Office

Office européen des brevets

(11) Veröffentlichungsnummer : **0 153 679**
**B1**

# (12) EUROPÄISCHE PATENTSCHRIFT

(45) Veröffentlichungstag der Patentschrift :
20.01.88

(21) Anmeldenummer : 85101717.8

(22) Anmeldetag : 15.02.85

(51) Int. Cl.⁴ : **C 08 L 61/24**, C 09 D 3/52,
C 08 J 3/02

(54) **Verfahren zur Herstellung wässriger Dispersionen von Kondensationsprodukten aus Harnstoff und CH-aciden Aldehyden sowie deren Verwendung.**

(30) Priorität : 23.02.84 DE 3406473

(43) Veröffentlichungstag der Anmeldung :
04.09.85 Patentblatt 85/36

(45) Bekanntmachung des Hinweises auf die Patenterteilung : 20.01.88 Patentblatt 88/03

(84) Benannte Vertragsstaaten :
AT BE CH DE FR GB IT LI NL SE

(56) Entgegenhaltungen :
DE-A- 2 737 927
GB-A- 1 069 526

(73) Patentinhaber : BASF Aktiengesellschaft
Carl-Bosch-Strasse 38
D-6700 Ludwigshafen (DE)

(72) Erfinder : Fischer, Kurt
Mundenheimer Strasse 168
D-6700 Ludwigshafen (DE)
Erfinder : Petersen, Harro, Dr.
Kalmitstrasse 23
D-6710 Frankenthal (DE)
Erfinder : Loch, Werner, Dr.
In der Bleiche 2
D-6701 Erpolzheim (DE)
Erfinder : Kasch, Hellmuth, Dipl.-Ing.
Rheinecke 2
D-6700 Ludwigshafen (DE)
Erfinder : Wistuba, Eckehardt, Dr.
Im Obergarten 7
D-6702 Bad Duerkheim (DE)

**0 153 679**

**Beschreibung**

Die vorliegende Erfindung betrifft ein Verfahren zur Herstellung stabiler wäßriger Dispersionen von Kondensationsprodukten aus Harnstoff und CH-aciden Aldehyden sowie deren Verwendung in Kombination mit verschiedenen Filmbildnern, wie wäßrigen Lösungen und/oder Dispersionen von Alkydharzen und/oder Polymerisaten α,β-ethylenisch ungesättigter Verbindungen.

Kondensationsprodukte aus Harnstoff und CH-aciden Aldehyden sowie gegebenenfalls Formaldehyd sind schon seit langem bekannt und beispielsweise in den europäischen Patentschriften Nr. 0 002 793 und Nr. 0 002 794 beschrieben.

Die Herstellung dieser Kondensationsprodukte, bei denen es sich um Hartharze handelt, erfolgt im allgemeinen durch säurekatalysierte Kondensation von Harnstoff und CH-aciden Aldehyden, gegebenenfalls in Kombination mit Formaldehyd (Aldehydharze).

Aldehydharze eignen sich in Kombination mit hochmolekularen Filmbildnern, wie z. B. Cellulosederivaten, Chlorkautschuk, Mischpolymerisaten auf Vinylester-, Vinylether-, Vinylchlorid-, Vinylaromaten-, Acrylester-Basis oder chemisch trocknenden Bindemitteln, wie z. B. Alkydharzen, trocknenden und halbtrocknenden Ölen zur Herstellung von Lacken.

Die Harze weden üblicherweise mit den in der Lacktechnik üblichen Lösungs- und Verdünnungsmitteln, wie Alkoholen, Ketonen, Estern, aliphatischen und aromatischen Kohlenwasserstoffen, wie z. B. Testbenzin, Hexan, Toluol, Xylol and anderen Hilfsmitteln verarbeitet.

Aufgabe der vorliegenden Erfindung ist es, Hartharze anderen Einsatzgebieten zugänglich zu machen und gleichzeitig eine umweltfreundlichere Verarbeitung dieser Harze zu ermöglichen. Außerdem sollten die Vergilbungsbeständigkeit gegen Licht und Wärme, sowie Füllkraft und Härte der Lackfilme verbessert werden.

Es wurde gefunden, daß man stabile wäßrige Sekundärdispersionen von feinverteilten, wasserunlöslichen Aldehydharzen herstellen kann, indem man die Schmelze oder hochkonzentrierte Lösungen der Aldehydharze in Gegenwart von Schutzkolloiden gegebenenfalls unter Zusatz von Emulgatoren in Wasser dispergiert.

Gegenstand der vorliegenden Erfindung ist ein Verfahren zur Herstellung von stabilen wäßrigen Dispersionen von Kondensationsprodukten aus Harnstoff und CH-aciden Aldehyden sowie gegebenenfalls Formaldehyd, das dadurch gekennzeichnet ist, daß man die Schmelze oder hochkonzentrierte Lösungen dieser Kondensationsprodukte in Gegenwart von organischen Schutzkolloiden, gegebenenfalls unter Zusatz von Emulgatoren in Wasser dispergiert.

Erfindungsgemäß werden als organische Schutzkolloide vorzugsweise Copolymerisate aus Vinyllactamen und Vinylestern oder carboxylgruppenhaltige (Meth-)acrylsäureestercopolymerisate, deren Carboxylgruppen zumindest teilweise neutralisiert sind, verwendet.

Gegenstand der vorliegenden Erfindung ist außerdem die Verwendung der erfindungsgemäß hergestellten wäßrigen Hartharz-Dispersionen in Kombination mit anderen Filmbildnern, insbesondere in Kombination mit wäßrigen Lösungen und/oder Dispersionen von Alkydharzen und/oder Polymerisaten α,β-ethylenisch ungesättigter Verbindungen als Lackbindemittel.

Zum erfindungsgemäßen Verfahren und den dafür in Frage kommenden Aufbaukomponenten ist im einzelnen folgendes auszuführen.

Als Aldehydharze kommen für das erfindungsgemäße Verfahren die oben bereits genannten Kondensationsprodukte aus Harnstoff und CH-aciden Aldehyden, wie z. B. Isobutyraldehyd, n-Butyraldehyd, 2-Methylpentanal, 2-Ethylhexanal und/oder 2-Phenylpropanal, gegebenenfalls in Kombination mit Formaldehyd in Betracht. Diese Harze können z. B. nach der europäischen Patentschrift Nr. 0 002 793 bzw. Nr. 0 002 794 aus Harnstoff oder substituierten Harnstoffen und CH-aciden Aldehyden, wie Isobutyraldehyd sowie gegebenenfalls in Kombination mit Formaldehyd durch saure katalysierte Kondensation erhalten werden und weisen im allgemeinen Erweichungspunkte (nach DIN 53 180) zwischen 60 und 140 °C, vorzugsweise zwischen 70 und 100 °C auf. Derartige Kondensationsprodukte und deren Herstellung sind beispielsweise in den oben genannten europäischen Patentschriften beschrieben.

Bevorzugte Kondensationsprodukte (= Aldehydharze = Hartharze) sind solche, die Harnstoff und CH-aciden Aldehyd im Molverhältnis 1 : 4 bis 1 : 10, wobei bis zu 50 Molprozent des CH-aciden Aldehyds durch Formaldehyd ersetzt sein können, einkondensiert enthalten.

Erfindungsgemäß werden die Aldehyd-Harze in geschmolzener Form oder in Form ihrer hochkonzentrierten, etwa 75 bis 95 %igen Lösungen in Wasser dispergiert, das organisches Schutzkolloid sowie gegebenenfalls zusätzlich Emulgatoren enthält.

Als Lösungsmittel für die Harzlösungen kommen in Frage Alkanole mit 1 bis 12 Kohlenstoffatomen, wie Ethanol, Isopropanol, Butanole, wie n-Butanol und/oder Isobutanol, 2-Ethylhexanol sowie Gemische der genannten Alkohole. Ebenso eignen sich Glykolmonoalkylether, wie z. B. Ethyl-ethylenglykol und/oder Butyl-ethylenglykol, Diethylenglykolalkylether und Dipropylenglykolalkylether sowie deren Mischungen, Aromaten, wie Toluol und Xylol sowie Testbenzin.

Geeignete organische Schutzkolloide sind Copolymerisate aus Vinyllactamen und Vinylestern sowie Polymerdispersionen auf Acrylester/(Meth)-acrylsäure-Basis.

2

Besonders geeignet sind Copolymerisate aus Vinylestern von 1 bis 4 Kohlenstoffatome enthaltenden Carbonsäuren, wie Vinylformiat, Vinylacetat, Vinylpropionat, Vinylbutyrat mit N-Vinylamiden, wie Vinylpyrrolidon oder Vinylcaprolactam. Bevorzugt eignen sich Copolymerisate des Vinylpyrrolidons mit Vinylacetat und/oder Vinylproprionat, insbesondere solche, die Vinylpyrrolidon und Vinylester im Molverhältnis 1 : 1,2 bis 1 : 0,2 einpolymerisiert enthalten, z. B. Copolymerisate aus ca. 66 Teilen N-Vinylpyrrolidon und ca. 34 Teilen Vinylpropionat mit K-Werten (nach DIN 51 562 0,5 % in $H_2O$) von 40 bis 45 (30 %ig in Wasser).

Ebenso eignen sich als organische Schutzkolloide Copolymerisate aus olefinisch ungesättigten, hydrophile Gruppen, wie Hydroxyl-, Carboxyl-, Amid- und/oder Amino-Gruppen enthaltenden Monomeren und anderen copolymerisierbaren olefinisch ungesättigten organischen Verbindungen, wie z. B. Estern der Acrylsäure oder Methacrylsäure mit 1 bis 12, vorzugsweise 1 bis 4 Kohlenstoffatome enthaltenden Alkoholen, wie Ethyl-(meth)acrylat, Propyl-(meth)acrylat, Butandioldiacrylat, Hexandioldiacrylat, Diethylaminoethylacrylat, Vinylestern von 1 bis 12, vorzugsweise 2 bis 4 Kohlenstoffatome enthaltenden carbonsäuren, wie Vinylacetat und/oder Vinylpropionat, Vinylethern mit 1 bis 12, vorzugsweise 2 bis 4 Kohlenstoffatome enthaltenden Alkoholen, wie Vinylethylether, Vinylisobutylether, Vinylaromaten, wie Styrol und/oder Vinyltoluol oder Vinylcyclohexen sowie Gemischen dieser Monomeren.

Die olefinisch ungesättigten, hydrophile Gruppen, wie Hydroxyl-, Carboxyl-, Amid- und/oder Amino-Gruppen enthaltenden Monomeren sind in den Copolymerisaten in solchen Mengen einpolymerisiert, daß die Copolymerisate — im Falle der Carboxylgruppen enthaltenden Copolymerisate nach zumindest teilweiser Neutralisation mit Alkali, Ammoniak oder organischen Aminen — wasserlöslich oder zumindest gleichmäßig wasserquellbar sind.

Als Hydroxylgruppen enthaltende copolymerisierbare olefinisch ungesättigte Monomere eignen sich z. B. Hydroxyalkylacrylate oder Hydroxyalkylmethacrylate mit 2 bis 12 Kohlenstoffatomen in der Alkylgruppe, wie Hydroxyethyl(meth-)acrylat, Hydroxypropylacrylat oder Hydroxybutylacrylat oder deren Gemische.

Als carboxylgruppenhaltige copolymerisierbare olefinisch ungesättigte Monomere eignen sich z. B. olefinisch ungesättigte Mono- und Dicarbonsäuren wie Acrylsäure, Methacrylsäure, Crotonsäure, Maleinsäure, Maleinsäurehalbester von Monoalkanolen mit 1 bis 4 Kohlenstoffatomen, Itaconsäure, Itaconsäurehalbester, sowie deren Gemischen, wobei Acrylsäure und Methacrylsäure bevorzugt sind.

Als amidgruppenhaltige copolymerisierbare olefinisch ungesättigte Monomere eignen sich beispielsweise Acrylamid, Methacrylamid, oder deren Derivate, wie N-Alkyl-(meth)-acrylamid, N-Alkoxymethyl-(meth)-acrylamid mit 1 bis 4 Kohlenstoffatomen in der Alkyl- bzw. Alkoxygruppe und/oder N-Hydroxymethyl-(meth)-acrylamid.

Die erfindungsgemäß zu verwendenden organischen Schutzkolloide weisen im allgemeinen K-Werte (nach DIN 51 562) in wäßrigen Lösungen zwischen 10 und 100, vorzugsweise zwischen 20 und 50 auf.

Bevorzugte organische Schutzkolloide der letztgenannten Gruppe sind zumindest teilweise neutralisierte carboxylgruppenhaltige Copolymerisate, insbesondere Copolymerisate aus Acrylestern oder Methacrylestern, die teilweise durch Styrol ersetzt sein können, mit $\alpha,\beta$-olefinisch ungesättigten 3 bis 5 Kohlenstoffatome enthaltenden Carbonsäuren, wie Acrylsäure, Methacrylsäure, Maleinsäure oder Itaconsäure, wobei die Carbonsäure im allgemeinen in Mengen von 10 bis 60, insbesondere 25 bis 40 Gewichtsprozent, bezogen auf Gesamtgewicht des Copolymerisats einpolymerisiert ist. Beispiele für derartige bevorzugte Copolymerisate sind solche aus Acrylsäureethylester und Acrylsäure und/oder Methacrylsäure, die vor der Neutralisation als 25 %ige wäßrige Dispersionen einen pH-Wert von etwa 2 aufweisen.

Als gegebenenfalls mitzuverwendende Emulgatoren kommen insbesondere nichtionische Emulgatoren in Betracht, die gegebenenfalls teilweise, d. h. bis 50 Gewichtsprozent durch ionische Emulgatoren, wie Paraffin-(olefin)sulfonate oder sulfatierte, oxethylierte Alkylphenole mit .8 bis 9 C-Atomen in der Alkylgruppe und 5 bis 40 Ethylenoxid-Einheiten oder Fettsäure-triethanolaminester ersetzt sein können.

Als nichtionische Emulgatoren kommen beispielsweise Ethylenoxid- oder Propylenoxidaddukte von Fetalkoholen, z. B. von Talgfettalkohol oder $C_{12}$- bis $C_{14}$-Fettalkoholen in Frage. Bevorzugt sind derartige Ethylenoxidaddukte mit 5 bis 50, vorzugsweise 8 bis 25 Ethylenoxideinheiten pro Fettalkohol.

Andere mitverwendbare nichtionische Emulgatoren sind z. B. Ethylenoxidaddukte von Alkylphenolen mit 4 bis 18 C-Atomen in der Alkylgruppe oder oxethylierte Fettsäuren (Stearinsäure, Ölsäure) mit 5 bis 20 Ethylenoxid-Einheiten sowie Ricinusöl mit 5 bis 40 Ethylenoxid-Einheiten. Geeignet sind auch teilweise verseifte Polyvinylacetate bzw. Polyvinylalkohole, wasserlösliche Cellulosederivate oder Polyvinylpyrrolidone mit K-Wert 25 bis 100 (z. B. Luviskol[®] K) sowie verseifte Vinylacetat/Vinylpyrrolidon-Copolymerisate mit 50 Mol.% Pyrrolidongehalt mit K-Wert 20 bis 40.

Zur Durchführung des erfindungsgemäßen Verfahrens werden die Aldehyd-Harze als Schmelze oder in hochkonzentrierter Lösung mit dem schutzkolloidhaltigen Wasser, das gegebenenfalls noch einen Emulgatorzusatz enthält, vermischt. Dies kann bei Temperaturen, zwischen 40 und 100 °C unter Rühren oder unter Zuführen anderer Bewegungsenergie, beispielsweise durch Dispergieren mit Ultra-Turax oder durch Umwälzen über Düsen erfolgen.

Das organische Schutzkolloid wird dem als Dispersionsmedium dienenden Wasser im allgemeinen in Mengen von 0,1 bis 20, vorzugsweise 1 bis 5 Gew.%, bezogen auf Festharz zugefügt.

An Emulgatoren können 0 bis 20, vorzugsweise 0,1 bis 5 Gew.%, bezogen auf Festharz, zugesetzt werden. Das erfindungsgemäße Verfahren kann in üblichen Mischaggregaten, beispielsweise in Rührbehältern durchgeführt werden.

Man erhält nach dem erfindungsgemäßen Verfahren stabile wäßrige, feinteilige (mittlerer Teilchendurchmesser etwa 0,1 bis 10 μm) Dispersionen mit Feststoffgehalten von 30 bis 70 Gew.%, die gute Lagerstabilität aufweisen und sich sehr vorteilhaft mit anderen filmbildenden Lackbindemitteln auf wäßriger Basis, beispielsweise wäßrigen Alkydharzlösungen oder wäßrigen Polymerdispersionen verarbeiten lassen.

Als wäßrige Alkydharzlösungen bzw. -Dispersionen eignen sich die üblicherweise in der Technik verwendeten Produkte. Es können z. B. wasserverdünnbare kurzölige, mittelölige, langölige Alkydharze, z. B. solche auf Basis Ricinenalkydharz, die mit Triethanolamin neutralisiert in 55 %iger wäßriger Lösung vorliegen, oder mittelölige Alkydharze auf Basis von trocknenden Fettsäuren, die isocyanatmodifiziert sind, verwendet werden.

Geeignete wäßrige Polymerdispersionen sind beispielsweise Primärdispersionen von Copolymerisaten von Styrol/Butadien, Styrol/(Meth-)acrylsäure-$C_1$- bis $C_{12}$-alkylester, (Methyl-)acrylsäure-$C_1$- bis $C_{12}$-Alkylester, Vinylester, wie Vinylacetat und Vinylpropionat sowie Vinylester/(Meth-)acrylsäureester. Diese Copolymerisate können weitere Monomere mit OH-, COOH-, $CONH_2$-Gruppen einpolymerisiert enthalten, wobei letztere im allgemeinen in untergeordneten Mengen von 1 bis zu 10, vorzugsweise 2 bis 5 Gew.% einpolymerisiert sein können. Derartige Primärdispersionen sind z. B. in Houben-Weyl, Methoden der Organischen Chemie, Band 14/1 (1961), Seite 186 ff beschrieben und weisen im allgemeinen Feststoffgehalte von etwa 30 bis 65, vorzugsweise 45 bis 55 Gew.% auf.

Die erfindungsgemäß hergestellten Aldehyd-Harz-Dispersionen können je nach den gewünschten Eigenschaften der Lackierung in Mengen von 2 bis 50, vorzugsweise 5 bis 20 Gew.%, bezogen fest/fest mit den Alkydharzlösungen oder Polymerdispersionen kombiniert und gegebenenfalls nach Zusatz von Pigmenten, Füllstoffen, Farbstoffen, Verlaufsmittel (wie z. B. solchen auf Siliconöl-Basis), Härtungskatalysatoren (wie z. B. Co-, Pb- und/oder Mn-octoate und/oder -Naphthenate, z. B. ®Soligen, Co, Pb, Mn) und anderen Hilfsmitteln, die jeweils in für diese Zusatzstoffe üblichen Mengen zugefügt werden können, auf die zu überziehenden Substrate nach üblichen Verfahren, z. B. durch Streichen, Tauchen, Spritzen, Walzen, Gießen oder Rollen aufgetragen und getrocknet bzw. durch Erhitzen auf 80 bis 150 °C eingebrannt werden. Als zu überziehende Substrate eignen sich Metalle, Papier, Holzwerkstoffe, Kunststoffe und mineralische Untergründe.

Die so hergestellen Lackierungen zeichnen sich durch erhöhte Füllkraft, Härte und Glanz sowie durch hervorragende Vergilbungsresistenz gegen Licht und Wärme aus.

Die in den folgenden Beispielen genannten Teile und Prozente sind, soweit nicht anders angegeben, Gewichtsteile und Gewichtsprozente.

## Beispiel 1

In einer Rührapparatur, die mit Thermometer, Tropftrichter und einer Vakuum-Destillationsvorrichtung ausgestattet ist, werden 500 Teile eines Aldehydharzes auf Basis eines Kondensationsproduktes aus Harnstoff, Formaldehyd und Isobutyraldehyd mit einem Erweichungspunkt von 80 bis 90 °C (DIN 53 180) in 170 Teilen Isobutanol gelöst. In die Harzlösung trägt man unter kräftigem Rühren bei 40 bis 50 °C innerhalb von 60 Minuten 211 Teile einer Mischung aus 200 Teilen einer 15 %igen wäßrigen Lösung eines Copolymerisats aus N-Vinylpyrrolidon und Vinylpropionat (2 : 1) un eines 90 %igen oxethylierten $C_{12}$- bis $C_{14}$-Fettalkohols ein. Nach beendetem Eintragen der Schutzkolloid-Emulgator-Mischung läßt man 20 Minuten nachrühren und tropft dann bei 45 bis 48 °C im Verlauf von 2 Stunden 600 Teile Wasser zu. Während des Zutropfens von Wasser wird gleichzeitig unter vermindertem Druck (110 mbar) Isobutanol/Wasser als Azeotrop abdestilliert.

Nach Abdestillieren von 470 Teilen Isobutanol/Wasser-Gemisch wird unter Rühren auf Raumtemperatur abgekühlt. Man erhält 1 010 Teile einer lagerstabilen, wäßrigen Harzdispersion mit einem Feststoffgehalt von 53 %.

## Beispiel 2

In einer wie in Beispiel 1 beschriebenen Rührapparatur werden 500 Teile des in Beispiel 1 angeführten Aldehydharzes (Erweichungspunkt nach DIN 53 180 = 80 bis 90 °C) bei 70 bis 80 °C in 60 Teilen Isobutanol gelöst. Anschließend trägt man in die ca. 70 °C warme Harzlösung unter kräftigem Rühren innerhalb von 60 Minuten eine Mischung aus 200 Teilen einer 15 %igen Lösung des N-Vinylpyrrolidon/Vinylpropionat (2 : 1)-Copolymerisats und 50 Teilen einer 20 %igen wäßrigen Lösung eines hochoxethylierten Talgfettalkohols ein. Nach beendetem Eintragen der Schutzkolloid/Emulgator-Mischung läßt man 20 Minuten nachrühren und tropft dann bei 45 bis 50 °C innerhalb von 90 Minuten 300 Teile Wasser zu. Während des Zutropfens von Wasser wird gleichzeitig unter vermindertem Druck (ca. 100 mbar) Isobutanol/Wasser als Azeotrop abdestilliert. Nach Abdestillieren von ca. 200 Teilen Isobutanol/Wasser-Gemisch wird unter Rühren auf Raumtemperatur abgekühlt.

Man erhält 900 Teile einer 59 %igen, wäßrigen Harzdispersion, die durch Zusatz von Wasser auf 55 % Feststoffgehalt eingestellt wird.

## Beispiel 3

In einer Rührapparatur, die mit Rückflußkühler, Thermometer, Tropftrichter und gut wirkendem Rührer ausgestattet ist, werden 1 000 Teile des in Beispiel 1 genannten Aldehydharzes (Erweichungspunkt nach DIN 53 180 = 80 bis 90 °C) bei 80 bis 85 °C in 70 Teilen Isobutanol gelöst. Anschließend tropft man bei 70 bis 75 °C 500 Teile einer Mischung aus 400 Teilen der 15 %igen wäßrigen Lösung des bereits in den Beispielen 1 und 2 genannten N-Vinylpyrrolidon/Vinylpropionat-Copolymerisats und 100 Teilen der 20 %igen wäßrigen Lösung eines hochoxethylierten Talgfettalkohols zu. Nach beendetem Zutropfen der Schutzkolloid/Emulgator-Lösung läßt man 20 Minuten nachrühren und trägt dann bei 60 bis 62 °C im Verlauf von einer Stunde 400 Teile Wasser ein.

Man erhält 1 960 Teile einer stabilen Harzdispersion mit einem Feststoffgehalt von 55 %.

## Beispiel 4

500 Teile eines Aldehydharzes auf Basis von Harnstoff, Formaldehyd und Isobutyraldehyd (Erweichungspunkt nach DIN 53 180 = 80 bis 85 °C) werden unter Rühren bei 80 °C in 50 Teilen Butylglykol gelöst. Nach Abkühlen der Harzlösung auf 70 °C trägt man unter Beibehaltung dieser Temperatur innerhalb von 90 Minuten eine Lösung aus 200 Teilen der 15 %igen wäßrigen Lösung des oben genannten N-Vinylpyrrolidon/Vinylpropionat-Copolymerisats, 50 Teilen der in Beispiel 3 genannten 20 %igen wäßrigen Lösung des hochoxethylierten Talgfettalkohols und 230 Teilen Wasser ein. Man läßt 30 Minuten bei 60 bis 70 °C nachrühren und kühlt dann auf Raumtemperatur ab.

Es werden 1 030 Teile einer stabilen Dispersion mit einem Feststoffgehalt von 52,5 % erhalten.

## Beispiel 5

In einer wie in Beispiel 3 beschriebenen Rührapparatur werden 1 500 Teile des in Beispiel 1 genannten Aldehydharzes mit einem Erweichungspunkt von 80 bis 90 °C (DIN 53 180) bei 90 °C in 105 Teilen Isobutanol gelöst. Anschließend trägt man bei 85 bis 90 °C im Verlauf von 3 Stunden eine mit 8 Teilen 25 %iger Ammoniak-Lösung neutralisierte Lösung von 120 Teilen einer 25 %igen Polymerdispersion auf Acrylester-Methacrylsäure-Basis, die vor der Neutralisation einen pH-Wert von 2 aufweist, in 1 350 Teile Wasser ein. Nach einstündigem Nachrühren bei 60 °C wird auf Raumtemperatur abgekühlt.

Man erhält 3 070 Teile einer stabilen Dispersion mit einem Feststoffgehalt von 50 %.

## Beispiel 6 (nicht anspruchsgemäß)

Zu einer konzentrierten Harzlösung, die durch Lösen von 250 Teilen des in Beispiel 1 genannten Aldehydharzes (Erweichungspunkt nach DIN 53 180 = 80 bis 90 °C) in 20 Teilen Isobutanol hergestellt wird, läßt man unter kräftigem Rühren bei 70 °C eine Mischung aus 45 Teilen einer 55 %igen wäßrigen Alkydharzlösung auf Basis Ricinenalkydharz (Säurezahl = 30,5) und 6 Teilen Triethanolamin zutropfen. Anschließend werden bei 60 bis 70 °C innerhalb von 2 Stunden 200 Teile Wasser eingetragen. Danach wird unter Rühren auf Raumtemperatur abgekühlt.

Man erhält 520 Teile einer stabilen Harzdispersion mit einem Feststoffgehalt von 52,5 %.

## Beispiel 7

500 Teile eines Aldehydharzes auf Basis von Harnstoff und Isobutyraldehyd mit einem Erweichungspunkt von 70 bis 75 °C (DIN 53 180) werden in einem Rührkolben, der mit Kühler, Thermometer und Tropftrichter ausgestattet ist, bei ca. 95 bis 100 °C geschmolzen. In die Schmelze trägt man unter kräftigem Rühren innerhalb von 60 Minuten eine Mischung aus 200 Teilen einer 15 %igen, wäßrigen Lösung des oben genannten N-Vinylpyrrolidon/Vinylpropionat-Copolymerisats und 50 Teilen einer 20 %igen wäßrigen Lösung eines hochoxethylierten Talgfettalkohols ein. Die Temperatur wird während des Eintragens der Schutzkolloid/Emulgator-Mischung von 95 bis 100 °C auf ca. 60 °C gesenkt. Anschließend läßt man bei 55 bis 60 °C im Verlauf von zwei Stunden 300 Teile Wasser zufließen und kühlt dann unter Rühren auf Raumtemperatur ab.

Es werden 1 050 Teile einer wäßrigen Harzdispersion mit einem Feststoffgehalt von 51 % erhalten.

## Beispiel 8

Kombination einer Aldehydharz-Dispersion mit verschiedenen Filmbildehilfsmitteln

Die nach Beispiel 1 hergestellte Aldehydharz-Dispersion verfilmt bei Temperaturen von 44 bis 90 °C. Die Filmbildung wird durch Zusatz von Filmbildehilfsmitteln wie Alkylglykolen, z. B. Butylglykol, Alkylglykolestern, z. B. Butylglykolacetat, aromatischen Kohlenwasserstoffen, z. B. Xylol sowie aliphatischen Kohlenwasserstoffen, z. B. Testbenzin, die in Mengen von 5 bis 20 % zugesetzt werden, verbessert.

5

Zusätze von Butylglykol und/oder Testbenzin in Mengen von 5 bis 20 % ermöglichen die Verfilmung bereits bei Raumtemperatur.

Kenndaten der Dispersion :

Feststoffgehalt : 53 %

Auslaufzeit DIN 4-Becher 23 °C : 146 sec.

Mindestfilmbildetemperatur : 44 °C

In der nachfolgenden Tabelle 1 sind die Filmbildeeigenschaften (Mindestfilmbildetemperaturen), Viskositäten sowie Filmhärte der Dispersion mit verschiedenen Filmbildehilfsmitteln (Ethylglykolacetat, Xylol, Butylglykol, Testbenzin) dargestellt.

(Siehe Tabelle 1 Seite 7 f.)

Tabelle 1

| Teile Dispersion/ Teile Filmbilde-hilfsmittel | Filmbildung bei | | | Auslaufzeit DIN 4 Becher 23°C | Filmhärte (Pendeldämp-fung nach König [sec]) | Mindestfilm-bildetempera-tur (°C) |
|---|---|---|---|---|---|---|
| | Raumtem-peratur | 50°C | 120°C | | | |
| Ethylglykol-acetat | | | | | | |
| 9 : 1 | 0 | + | + | 125 | 104 | 16 |
| 8 : 2 | + | + | + | 140 | 62 | < 13 |
| Xylol | | | | | | |
| 9 : 1 | 0 | + | + | 225 | 47 | 18 |
| 8 : 2 | 0 | + | + | 340 | 40 | < 13 |
| Butylglykol | | | | | | |
| 9 : 1 | + | + | + | 110 | 42 | < 13 |
| 8 : 2 | + | + | + | 142 | 36 | < 11 |
| Testbenzin | | | | | | |
| 9 : 1 | + | + | + | 228 | 32 | < 13 |
| 8 : 2 | + | + | + | 340 | 28 | < 13 |

0 153 679

Beispiel 9

Kombination der Aldehydharz-Dispersion mit einem wasserverdünnbaren Ricinenalkydharz (z. B. ®Alkydal R40W)

100 Gewichtsteile des 55 %ig in einem Glykolether/Wasser-Gemisch gelösten Harzes wurden mit 2,5 Gewichtsteilen Dimethylethanolamin in die wasserverdünnbare Form überführt. Dieses wasserverdünnbare Alkydharz wurde mit der nach Beispiel 1 hergestellten Aldehydharz-Dispersion, der 10 % Butylglykol als Filmbildehilfsmittel zugesetzt wurde, kombiniert. Von diesen wäßrigen Gemischen, die in Tabelle 2 angegeben sind, wurden jeweils 200 μm (naß) auf Glas aufgerakelt. Die Trocknung erfolgte eine Stunde bei 150 °C. Untersucht wurde der Einfluß steigender Aldehydharz-Dispersions-Mengen in sikkativierten und nicht sikkativierten Systemen auf die Filmhärte. Die Ergebnisse sind in Tabelle 2 zusammengestellt :

Tabelle 2

| | | | | | |
|---|---|---|---|---|---|
| Alkyldal R 40 W (55 %) pH 8,5 | 100 | 90 | 80 | 60 | 40 |
| Aldehydharz-Dispersion aus Beispiel 1 + Butylglykol 9 : 1 | – | 10 | 20 | 40 | 60 |
| Filmhärte (Pendeldämpfung nach König) [sec] | | | | | |
| a) ohne Sikkativ *) | 10 | 18 | 30 | 113 | 182 |
| b) mit Sikkativ *) | 28 | 38 | 82 | 184 | 194 |

*) Sikkativ = Co-, Pb- und Mn-Octoat/Naphthenat-Gemisch.

Beispiel 10

Kombination der Aldehydharz-Dispersion mit einem wasserverdünnbaren, isocyanatmodifizierten, mittelöligen Alkydharz auf Basis trocknender Fettsäuren (z. B. ®Alkyldal F50W) zur Herstellung eines luft- und ofentrocknenden Industrielackes :

Ein mit Ammoniak neutralisiertes Alkydharz wurde mit 10 und 20 % der nach Beispiel 1 hergestellten Aldehydharz-Dispersion versetzt, wobei dann jeweils ein vordispergiertes pigmentiertes Gemisch (= Mischung I) mit einem vordispergierten Sikkativ-haltigen Gemisch (= Mischung II) kombiniert wurde. Untersucht wurde der Einfluß auf die Filmhärte, die Vergilbung und den Glanz. Die Ergebnisse sind in der Tabelle 3 zusammengefaßt :

Tabelle 3

| | | | |
|---|---|---|---|
| **Mischung I:** | | | |
| Alkydal® F 50 W (55 % in Butylglykol) pH 9,5 | 71,8 | 64,2 | 57,1 |
| Aldehydharz-Dispersion aus Beispiel 1 | – | 7,4 | 14,7 |
| Byk 301**) | 0,4 | 0,4 | 0,4 |
| Titandioxid, Rutil-Type | 94,5 | 94,5 | 94,5 |
| Wasser | 84 | 84 | 84 |
| **Mischung II:** | | | |
| Alkydal® F 50 W (55 % in Butylglykol) pH 9,5 | 100,5 | 90,5 | 80,5 |
| Aldehydharz-Dispersion aus Beispiel 1 | – | 10,4 | 20,8 |
| (R-) Soligen Co Pb Mn 50 %ig *) | 1,9 | 1,75 | 1,5 |
| Wasser | 126 | 126 | 126 |

(Fortsetzung)

Filmhärte:
(Pendeldämpfung nach König [sec])
a) Trocknung 1 Stunde bei 50°C

|  |  |  |  |
|---|---|---|---|
| + 2 Tage bei Raumtemperatur | 60 | 66 | 71 |

b) Trocknung 45 Minuten bei 120°C

|  |  |  |  |
|---|---|---|---|
| + 2 Tage bei Raumtemperatur | 81 | 86 | 89 |

Vergilbung (Benotung 0 bis 6)
a) Trocknung 1 Stunde bei 50°C

|  |  |  |  |
|---|---|---|---|
| + 2 Tage bei Raumtemperatur | 1 | 0-1 | 0-1 |

b) Trocknung 45 Minuten bei 120°C

|  |  |  |  |
|---|---|---|---|
| + 2 Tage bei Raumtemperatur | 3 | 2 | 1-2 |

Glanz (Multigloss 60° [%])
a) Trocknung 1 Stunde bei 50°C

|  |  |  |  |
|---|---|---|---|
| + 2 Tage bei Raumtemperatur | 89 | 90 | 94 |

b) Trocknung 45 Minuten bei 120°C

|  |  |  |  |
|---|---|---|---|
| + 2 Tage bei Raumtemperatur | 89 | 92 | 95 |

Wasserfestigkeit nach 3 Stunden bei

| Raumtemperatur | in Ord-nung | in Ord-nung | in Ord-nung |
|---|---|---|---|

*) = Sikkativ (Co-, Pb- und Mn-Octoat/-Naphtenat-Gemisch)
**) = Verlaufhilfsmittel (Fa. Mallinckrodt, Wesel)

Beispiel 11

Kombination der Aldehydharz-Dispersion mit einer Styrol-Acrylat-Copolymerisat-Primärdispersion als Bindemittel für eine Innenfarbe :

In einer matten, waschbeständigen Innenfarbe (s. Tabelle 4) wurden 20 % der Styrol-Acrylat-Copolymerisat-Dispersion durch die nach Beispiel 1 hergestellte Aldehydharz-Dispersion substituiert. Untersucht wurde der Einfluß auf die Scheuerfestigkeit, die Verarbeitbarkeit sowie die Vergilbung.

Tabelle 4

| Wasser | 7,9 | 7,9 |
|---|---|---|
| Natriumpolyphosphat 10 %ig | 2,5 | 2,5 |
| Pigmentverteiler A *) | 0,2 | 0,2 |
| Ammoniak konz. | 0,2 | 0,2 |
| Konservierungsmittel (Chloracetamid) | 0,5 | 0,5 |
| Methylcellulose hv., 2 %ig | 20,0 | 20,0 |
| hochoxethylierter Talgfettalkohol, 20 %ig | 0,5 | 0,5 |
| Testbenzin | 1,2 | 1,2 |
| Texanol **) | 0,8 | 0,8 |
| Titandioxid, Rutil-Type | 6,0 | 6,0 |
| Calciumcarbonat, gefällt (amorph) | 15,0 | 15,0 |
| mineralisches CaCO₃ (mittlere Teilchengröße 4-6μm) | 15,0 | 15,0 |
| Micro-Talkum | 5,0 | 5,0 |
| mineralisches CaCO₃ (mittlere Teilchengröße 4,5μm) | 15,0 | 15,0 |
| Entschäumer (auf Silikonöl-Basis) | 0,2 | 0,2 |
| Styrol-Acryl Copolymer-Dispersion 50 %ig (Teilchengröße ca. 0,1μm) | 10,0 | 8,0 |
| Aldehydharz-Dispersion nach Beispiel 1 | - | 2,0 |
| Scheuerzyklen | 1250 | 1200 |
| Verarbeitung | in Ordnung | in Ordnung |
| Vergilbung | 0-1 | 0 |

*) = carboxylgruppenhaltiges Copolymerisat mit NH₃ uf pH = 9 gestellt
**) = 3-Oxi-2,4,4-trimethylpentylisobutyrat

9

**0 153 679**

1. Verfahren zur Herstellung von stabilen wäßrigen Dispersionen von Kondensationsprodukten aus Harnstoff, CH-aciden Aldehyden sowie gegebenenfalls Formaldehyd, dadurch gekennzeichnet, daß man die Schmelze oder hochkonzentrierte Lösungen dieser Kondensationsprodukte in Gegenwart von organischen Schutzkolloiden, gegebenenfalls unter Zusatz von Emulgatoren in Wasser dispergiert.

2. Verfahren nach Anspruch 1, dadurch gekennzeichnet, daß als Kondensationsprodukte aus Harnstoff und CH-aciden Aldehyden sowie gegebenenfalls Formaldehyd solche verwendet werden, die Harnstoff und CH-aciden Aldehyd im Molverhältnis 1 : 4 bis 1 : 10, wobei bis zu 50 Molprozent des CH-aciden Aldehyds durch Formaldehyd ersetzt sein können, einkondensiert enthalten.

3. Verfahren nach Anspruch 1 oder 2, dadurch gekennzeichnet, daß als organische Schutzkolloide Copolymerisate aus Vinyllactamen und Vinylestern verwendet werden.

4. Verfahren nach Anspruch 1 oder 2, dadurch gekennzeichnet, daß als organische Schutzkolloide carboxylgruppenhaltige (Meth-)acrylsäureestercopolymerisate, deren Carboxylgruppen zumindest teilweise neutralisiert sind, verwendet werden.

5. Verfahren nach einem der Ansprüche 1 bis 4, dadurch gekennzeichnet, daß als Emulgatoren nichtionische Emulgatoren verwendet werden.

6. Verfahren nach Anspruch 5, dadurch gekennzeichnet, daß als nichtionische Emulgatoren oxethylierte Fettalkohole verwendet werden.

7. Verwendung der nach einem Verfahren gemäß einem der Ansprüche 1 bis 6 hergestellten wäßrigen Harzdispersionen in Kombination mit anderen Filmbildnern als Lackbindemittel.

8. Verwendung der nach einem Verfahren gemäß einem der Ansprüche 1 bis 6 hergestellten wäßrigen Harzdispersionen in Kombination mit wäßrigen Lösungen und/oder Dispersionen von Alkydharzen und/oder Polymerisaten α,β-ethylenisch ungesättigter Verbindungen als Lackbindemittel.

**Claims**

1. A process for the preparation of a stable aqueous dispersion of a condensate of urea and a CH-acidic aldehyde, with or without formaldehyde, wherein a melt or highly concentrated solution of this condensate is dispersed in water in the presence of an organic protective colloid, with or without the addition of an emulsifier.

2. A process as claimed in claim 1, wherein a condensate which contains urea and a CH-acidic aldehyde in a molar ratio of from 1 : 4 to 1 : 10 as condensed units, where as much as 50 mole percent of the CH-acidic aldehyde can be replaced with formaldehyde, is used as the condensate of urea and a CH-acidic aldehyde with or without formaldehyde.

3. A process as claimed in claim 1 or 2, wherein the organic protective colloid used is a copolymer of a vinyl-lactam and a vinyl ester.

4. A process as claimed in claim 1 or 2, wherein the organic protective colloid used is a carboxyl-containing (meth)acrylate copolymer, some or all of whose carboxyl groups are neutralized.

5. A process as claimed in claim 1 or 2 or 3 or 4, wherein the emulsifier used is a non-ionic emulsifier.

6. A process as claimed in claim 5, wherein the non-ionic emulsifier used is an ethoxylated fatty alcohol.

7. Use of an aqueous resin dispersion prepared by a process as claimed in claim 1 or 2 or 3 or 4 or 5 or 6 in combination with other film formers as a surface coating binder.

8. Use of an aqueous resin dispersion prepared by a process as claimed in claim 1 or 2 or 3 or 4 or 5 or 6 in combination with an aqueous solution and/or dispersion of an alkyl resin and/or polymer of an α,β-ethylenically unsaturated compound as a surface coating binder.

**Revendications**

1. Procédé de préparation de dispersions aqueuses stables de produits de condensation d'urée, d'aldéhydes acides en CH, ainsi qu'éventuellement du formaldéhyde, caractérisé par le fait que l'on disperse dans l'eau, éventuellement avec addition d'émulsifiants, la masse fondue ou les solutions à haute concentration de ces produits de condensation, en présence de colloïdes protecteurs organiques.

2. Procédé selon la revendication 1, caractérisé par le fait que, comme produits de condensation d'urée, d'aldéhydes acides en CH, ainsi qu'éventuellement du formaldéhyde, on utilise ceux qui contiennent à l'état condensé l'urée et l'aldéhyde acide en CH, en rapport molaire de 1/4 à 1/10, jusqu'à 50 moles% de l'aldéhyde acide en CH pouvant être remplacées par du formaldéhyde.

3. Procédé selon la revendication 1 ou 2, caractérisé par le fait que, comme colloïdes protecteurs organiques, on utilise des copolymérisats de lactames vinyliques et esters vinyliques.

4. Procédé selon la revendication 1 ou 2, caractérisé par le fait que, comme colloïdes protecteurs organiques, on utilise des copolymérisats d'esters (meth)-acryliques, à groupes carboxyle, dont les groupes carboxyle sont, au moins partiellement, neutralisés.

10

5. Procédé selon l'une des revendications 1 à 4, caractérisé par le fait que, comme émulsifiants, on utilise des émulsifiants non ioniques.

6. Procédé selon la revendication 5, caractérisé par le fait que, comme émulsifiants non ioniques, on utilise des alcools gras oxéthylés.

7. Utilisation comme liants pour vernis et peintures des dispersions de résines aqueuses préparées par un procédé selon une des revendications 1 à 6, en combinaison avec d'autres filmogènes.

8. Utilisation comme liants pour vernis et peintures des dispersions de résines aqueuses préparées par un procédé selon une des revendications 1 à 6, en combinaison avec des solutions et/ou dispersions aqueuses de résines alkyles et/ou polymérisats de composés insaturés éthyléniquement en $\alpha$, $\beta$.